# FASCICULE DE BREVET EUROPEEN

(11) **EP 0 518 748 B1**
(45) Date de publication et mention de la délivrance du brevet: **19.04.1995**
(21) Numéro de dépôt: 92401583.7
(22) Date de dépôt: 09.06.1992
(51) Int. Cl.: B65G 23/06

(54) **Perfectionnements aux transporteurs à bande sans fin**
Förderer mit endlosem Band
Conveyors having an endless belt

(30) Priorité: 10.06.1991 FR 9107040
(43) Date de publication de la demande: 16.12.1992
(73) Titulaire: F C B, 93100 Montreuil Cédex (FR)
(72) Inventeur: Dauchez, Gilbert, F-93150 Blanc Mesnil (FR)
(74) Mandataire: Fontanié, Etienne

(56) Documents cités:
- EP-A- 0 403 818
- FR-A- 2 045 041
- US-A- 3 518 940
- US-A- 4 332 448

## Description

La présente invention concerne les transporteurs à bande sans fin.

L'invention a trait plus particulièrement aux transporteurs de ce type dont la bande a une très faible épaisseur, de l'ordre du 1/10 de millimètre. Ces transporteurs trouvent une utilisation, en particulier, dans les séparateurs magnétiques à haute intensité destinés à la séparation des produits à faible susceptibilité magnétique et comportant un rotor consistant en un ensemble de pièces polaires et d'aimants permanents en forme de disque disposés en alternance sur un arbre, ledit rotor constituant le tambour moteur du transporteur. Dans ces appareils, la bande sert, d'une part, à amener le produit à séparer sur le rotor et à évacuer les particules magnétiques et, d'autre part, à protéger le rotor contre l'encrassement et l'abrasion. Elle doit être réalisée en un matériau non-magnétique et avoir une épaisseur aussi faible que possible pour ne pas affecter de manière appréciable les performances du rotor.

Pour éviter qu'elle ne se déplace transversalement, la bande doit être guidée à l'une de ses extrémités ou aux deux. L'une des solutions connues consiste à prévoir sur le tambour moteur, à au moins une de ses extrémités, une rangée circulaire de tétons s'engageant dans des trous percés sur le bord de la bande. Le document US.A.3518940 décrit, par exemple, une machine comportant un transporteur à bande sans fin dont la bande est tendue entre des rouleaux et entrainée par deux pignons dont les dents s'engagent dans des trous prévus sur les bords de la bande. Ces pignons sont montés sur des portées cylindriques de l'un des rouleaux par l'intermédiaire de roulements à billes, et un embrayage à friction permet de transmettre des pignons au rouleau un couple limité qui autorise le glissement de la bande sur le rouleau. Cette solution ne peut pas être adoptée sans précautions sur les transporteurs à bande très mince dans lesquels l'un des rouleaux est moteur et entraine la bande pour les raisons suivantes : à cause des tolérances de fabrication et de l'allongement de la bande sous tension, il existe obligatoirement des différences entre l'écartement des tétons et l'écartement des trous de la bande, de sorte qu'au bout d'une période de marche plus ou moins longue, il n'y a plus coïncidence entre les tétons et les trous, et les premiers, exercent alors sur les bords des trous des efforts qui tendent à faire glisser la bande sur le tambour et qui, dans le cas d'une bande très mince et, par conséquent, peu résistante, provoqueraient le déchirement de la bande.

Le but de la présente invention est d'éliminer ce risque et de permettre l'utilisation sur un transporteur à bande mince de moyens de guidage du type à trous et tétons pouvant éventuellement servir à entraîner la bande

L'invention a pour objet un transporteur à bande sans fin dans lequel la bande est tendue entre deux rouleaux ou tambours dont l'un est moteur et muni à au moins une de ses extrémités de moyens de guidage de la bande constitués par une rangée circulaire de tétons s'engageant dans des trous percés sur le bord de la bande, lesdits tétons étant solidaires de la bague extérieure d'une roue libre dont la bague intérieure est fixée sur l'arbre du tambour, et ladite roue libre autorisant la rotation de la bague extérieure par rapport au tambour uniquement dans le sens de rotation du tambour. Cette solution permet d'entraîner la bande au moyen des tétons et par conséquent, de diminuer les efforts de traction dans la partie utile de la bande, entraînée par friction par le tambour et d'éviter le glissement de la bande sur le tambour lorsqu'elle est détendue. La bande pourra être renforcée par des oeillets placés dans les trous et/ou par un ruban fixé, par exemple par collage, sur le bord de la bande.

Bien que les moyens de guidage de l'invention puissent être prévus à une seule extrémité du tambour, il sera généralement avantageux de les prévoir aux deux extrémités.

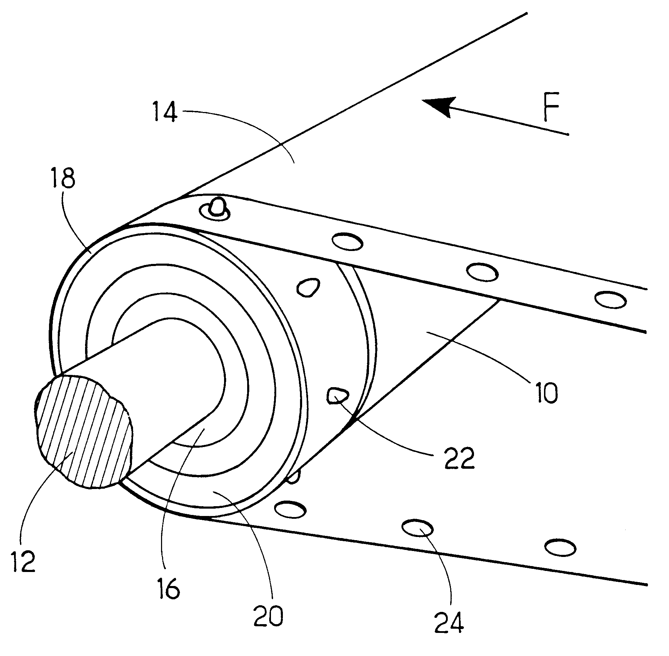

Les caractéristiques de l'invention apparaîtront plus clairement à la lecture de la description qui suit et se réfère au dessin l'accompagnant qui montre, à titre d'exemple non limitatif, une forme de réalisation de l'invention. L'unique figure du dessin est une vue partielle, en perspective, d'un transporteur à bande sans fin conforme à l'invention.

Sur ce dessin, le numéro de référence 10 désigne le tambour menant du transporteur dont l'arbre 12 est accouplé à un groupe moto-réducteur, non représenté, permettant de l'entraîner en rotation. La bande sans fin 14 est tendue entre le tambour 10 et un second tambour ou rouleau, non représenté, dont l'axe est parallèle à celui du tambour.

Des moyens de guidage de la bande sont prévus aux deux extrémités du tambour 10. Ces moyens comportent une roue libre dont la bague intérieure 16 est fixée, par exemple par frettage, sur l'arbre 12 du tambour 10 et une frette 18 solidaire de la bague extérieure 20 de la roue libre et munie de tétons 22 régulièrement espacés l'un de l'autre sur une circonférence de la frette.

La roue libre est du type à cames ou à galets et est montée de telle sorte que la bague portant les tétons 22 soit entraînée en rotation par l'arbre 12, lorsque le tambour 10 tourne dans le sens de la flèche F, et ne puisse tourner que dans ce sens par rapport au tambour.

Le diamètre extérieur de la frette 18 est légèrement inférieur à celui du tambour. Les tétons ont une pointe tronconique ou arrondie.

Les tétons 22 pénètrent dans des trous 24 percés dans le bord de la bande et dont l'écartement est égal à celui des tétons. Ces trous peuvent être renforcés par des oeillets. Le bord de la bande peut aussi être renforcé par un ruban fixé sur la bande, par exemple par collage.

A cause des tolérances de fabrication et des déformations de la bande, l'écartement circonférentiel entre les tétons n'est jamais rigoureusement égal à l'écartement des trous du bord de la bande. Il s'ensuit qu'au bout d'un temps plus ou moins long, le jeu prévu entre les tétons et les trous est totalement absorbé, dans un sens ou dans l'autre.

Si l'écartement entre les tétons est plus petit que celui entre les trous, les tétons exerceront sur la bande, en pénétrant dans les trous, un effort circonférentiel dans le sens de rotation qui provoquera un plissement sans conséquence du bord de la bande. Dans le cas contraire, si les tétons étaient solidaires du tambour, ils exerceraient sur la bande un effort opposé au sens de déplacement de la bande tendant à faire glisser la bande sur le tambour. Comme le frottement de la bande sur le tambour s'oppose à ce glissement, les efforts exercés risqueraient de déchirer la bande. Grâce à la disposition de l'invention, c'est la frette 18 portant les tétons qui va tourner vers l'avant par rapport au tambour et à la bande pour permettre aux tétons de pénétrer sans effort dans les trous de la bande ; le fait que la frette 18 ait un diamètre extérieur inférieur à celui du tambour facilite cette rotation en diminuant les frottements entre le bord de la bande et la frette.

Dans le cas où ce transporteur est incorporé à un séparateur magnétique à haute intensité du type décrit dans le préambule, la bande 14 est en une matière synthétique telle que celle connue sous la marque Teflon ou la marque Kevlar; son épaisseur est d'environ 0,12 à 0,13 mm.

L'invention présente un intêrêt même pour des bandes de plusieurs dixièmes de millimètre d'épaisseur, dans la mesure où il existe un risque de déchirure de la bande sous l'action d'efforts longitudinaux exercés sur ses bords.

Dans la forme de réalisation décrite ci-dessus, les tétons assurent le guidage de la bande et participent à son entraînement.

## Revendications

1. Transporteur à bande sans fin dans lequel la bande (14) est tendue entre deux rouleaux ou tambours dont l'un (10) est moteur et muni à au moins une de ses extrémités de moyens de guidage de la bande constitués par une rangée circulaire de tétons (22) s'engageant dans des trous (24) percés sur le bord de la bande, lesdits tétons (22) étant solidaires de la bague extérieure (18-20) d'une roue libre dont la bague intérieure (16) est fixée sur l'arbre du tambour (10), et ladite roue libre autorisant la rotation de la bague extérieure par rapport au tambour uniquement dans le sens de rotation (F) du tambour.

2. Transporteur selon la revendication 1, caractérisé en ce que le diamètre extérieur de la bague extérieure (18-20) portant les tétons (22) est inférieur à celui du tambour (10).

3. Transporteur selon la revendication 1 ou 2, caractérisé en ce que des oeillets sont placés dans les trous (24) de la bande (14).

4. Transporteur selon la revendication 1, 2 ou 3, caractérisé en ce que la bande (14) est renforcée par un ruban fixé sur le bord de la bande.

5. Transporteur selon l'une quelconque des revendications précédentes, caractérisé en ce que ledit tambour (10) est constitué par le rotor d'un séparateur magnétique à haute intensité, et la bande (14) est en matière synthétique et a une épaisseur de quelques dixièmes de millimètre.

## Claims

1. Endless belt conveyor in which the belt (14) is tightened between two pulleys or drums one of which (10) is a drive pulley one at least of whose ends is provided with belt guiding means consisting of a circular row of studs (22) fitting into holes (24) punched on the edge of the belt, the said studs (22) being integral with the outer ring (18-20) of a free wheel whose inner ring (16) is fastened to the shaft of the pulley (10), and the said free wheel allowing the outer ring to rotate with respect to the pulley only in the direction of rotation (F) of the pulley.

2. Conveyor according to claim 1, characterized in that the outside diameter of the stud (22)-bearing outer ring (18-20) is smaller than that of the pulley (10).

3. Conveyor according to claim 1 or 2, characterized in that eyelets are placed in the holes (24) of the belt (14).

4. Conveyor according to claim 1, 2 or 3, characterized in that the belt (14) is reinforced by a ribbon fastened to the edge of the belt.

5. Conveyor according to any one of the above claims, characterized in that the said pulley (10) is composed of the roll of a high intensity magnetic separator, and the belt (14) is made of a synthetic material and is a few tenths of a millimetre thick.

## Patentansprüche

1. Endlos-Bandförderer bei dem das Band (14) zwischen zwei Rollen oder Trommeln gespannt wird, von denen eine (10) motorisiert und mindestens an einem ihrer Enden mit Bandführungsmitteln versehen ist, die aus einer kreisförmigen Reihe von Zapfen (22) bestehen, welche in in die Bandkante gebohrte Löcher (24) eingreifen, wobei besagte Zapfen (22) kraftschlüssig mit dem Außenring (18-20) eines Freilaufs verbunden sind, dessen Innenring (16) auf der Welle der Trommel (10) befestigt ist, und besagter Freilauf die Drehung des Außenringes im Verhältnis zur Trommel ausschließlich im Drehsinn (F) der Trommel gestattet.

2. Förderer gemäß Anspruch 1, dadurch gekennzeichnet, daß der Außendurchmesser des die Zapfen (22) tragenden Außenringes (18-20) kleiner ist als der der Trommel (10).

3. Förderer gemäß Anspruch 1 oder 2, dadurch gekennzeichnet, daß in die Löcher (24) des Bandes (14) Ösen eingefügt werden.

4. Förderer gemäß Anspruch 1, 2 oder 3, dadurch gekennzeichnet, daß das Band (14) durch einen auf der Bandkante befestigten Streifen verstärkt wird.

5. Förderer gemäß irgendeinem der vorherigen Ansprüche, dadurch gekennzeichnet, daß besagte Trommel (10) von dem Rotor eines Starkstrom-Magnetscheiders gebildet wird, und daß das Band (14) aus Kunststoff besteht und eine Dicke von einigen Zehnteln von Millimetern aufweist.
